Europäisches Patentamt

European Patent Office

Office européen des brevets

(11) Publication number: **0 140 467**
**B1**

## EUROPEAN PATENT SPECIFICATION

(45) Date of publication of patent specification: **31.05.89**

(51) Int. Cl.⁴: **C 09 K 5/06**

(21) Application number: **84304274.8**

(22) Date of filing: **25.06.84**

(54) Heat storage compositions.

(30) Priority: **23.06.83 GB 8317052**

(43) Date of publication of application:
**08.05.85 Bulletin 85/19**

(45) Publication of the grant of the patent:
**31.05.89 Bulletin 89/22**

(84) Designated Contracting States:
**AT BE CH DE FR IT LI LU NL SE**

(56) References cited:
**EP-A-0 011 411**
**EP-A-0 062 897**
**EP-A-0 101 181**
**US-A-2 827 438**

(73) Proprietor: **Albright & Wilson Limited**
**Albright & Wilson House Hagley Road West**
**Oldbury Warley West Midlands, B68 0NN (GB)**

(72) Inventor: **Williams, Thomas Alan**
**Jalna Braystones Road**
**Beckermet Cumbria (GB)**
Inventor: **Wilson, Arthur**
**21 Brackendale Way**
**Stourbridge West Midlands, DY9 7HF (GB)**
Inventor: **Minshall, Michael William**
**5 Wombourne Park**
**Wombourne Staffordshire VW5 00U (GB)**

(74) Representative: **Hamilton, Raymond et al**
**c/o Albright & Wilson Limited 1 Knightsbridge**
**Green**
**London SW1X 7QD (GB)**

Courier Press, Leamington Spa, England.

# EP 0 140 467 B1

**Description**

This invention relates to compositions which are useful for the storage of thermal energy, to processes for their manufacture and to their use as heat storage elements.

The storage of thermal energy finds particular application in the utilisation of energy which is generated at a time of low energy utilisation in order to store that energy and subsequently release it. Examples of areas of interest are the utilisation of "off-peak" electricity and solar heating units. One possible type of heat storage medium which has been proposed is the crystals of inorganic salts which are capable of forming a discrete hydrated salt which preferably incorporates many molecules of water of crystallisation. The salts which are useful are those which can be heated to a transition point at which water of crystallisation is released and the anhydrous or a less hydrated salt formed thus taking up thermal energy as latent heat and which on cooling undergo a reversion to the hydrated salt thus releasing the latent heat. Ideally the salt should be capable of undergoing a cycle involving the repeated transition between the two forms without any degradation so that a heat storage unit containing this salt will perform efficiently for as long a period as possible.

One salt which has been proposed for use as a heat storage medium is tetra sodium pyrophosphate (see for example European Patent Application 8220589 now published as publication No. 0101181). Tetra sodium pyrophosphate (hereinafter for convenience termed 4SP) forms a decahydrate which undergoes a transition to form the anhydrous salt at a temperature of approximately 70°C which is advantageous in that many domestic heating systems are designed to function at or just below this temperature. (The transition temperature is commonly defined as the maximum temperature achieved after supercooling).

The use of 4SP in a heat storage medium suffers from the disadvantage that the 4SP is degraded by hydrolysis. The heat capacity of a unit volume of the heat storage composition comprising 4SP decreases as does the temperature at which the transition between the hydrated and anhydrous phases takes place. The reduction in the heat capacity of the composition reduces the amount of heat stored during a single cycle.

It is believed that the deterioration in the performance of 4SP in a heat storage medium is due to the fact that the pyrophosphate is being hydrolysed to form disodium hydrogen phosphate. Accelerated testing suggests that a significant decline in the capacity of a heat storage composition based upon 4SP will occur within a few years of normal use in a domestic environment.

We have now discovered that the degradation of heat storage compositions comprising 4SP can be reduced by the presence of an additive which ensures that the pH of a 1% solution of the heat storage composition immediately prior to its use is at least 10.6. Accordingly from one aspect our invention provides a solid composition useful as a heat storage medium which comprises tetrasodium pyrophosphate decahydrate which is characterized in that a 1% solution of the composition has a pH of at least 10.6 at 25°C.

Examples of additives which can be used to maintain the pH of the heat storage compositions at the desired levels are the alkali metal hydroxides especially sodium hydroxide and the alkali metal orthophosphates especially trisodium orthophosphate and tripotassium orthophosphate.

The use of the alkali metal hydroxides represents a less preferred aspect of the present invention. They are not as effective as the orthophosphates in stabilizing the novel heat storage compositions and their use means that at temperatures below the transition temperature the heat storage composition comprises a solid phase consisting mainly of tetrasodium pyrophosphate decahydrate and a liquid phase which is a corrosive solution of the caustic alkali. The addition of one or more orthophosphates to the heat storage compositions of the invention represents a preferred aspect of the invention. We have discovered that the orthophosphates are surprisingly more effective than the alkali metal hydroxides in stabilizing the properties of the heat storage compositions. Their use also reduces the caustic nature of any liquid phase present at temperature below the transition temperature and thereby reduces the degradation of other components of the composition.

The preferred orthophosphates for use according to the present invention are trisodium orthophosphate and tripotassium orthophosphate (hereinafter for convenience termed TSP and TKP respectively). The preferred orthophosphate for present use is trisodium orthophosphate. The most preferred form of trisodium orthophosphate is the crystalline dodecahydrate.

The amount of orthophosphate which is present in the novel heat storage composition will be such as will impart the desired degree of stability to the pyrophosphate. Preferably the compositions comprise at least 2.5% by weight of orthophosphate (expressed as the weight of anhydrous salt) of the weight of the pyrophosphate (expressed as the anhydrous salt). Usually at least 2.7% preferably at least 3.0 and more preferably 3.35 and most preferably at least 4.5% by weight of orthophosphate will be present.

The quantity of orthophosphate will preferably not exceed about 8.9% and will more preferably be not more than 8.0% by weight. Additional quantities of orthophosphate may be employed up to the point at which a hydrated salt of the orthophosphate is present in the solid phase at temperatures above the transition temperature. In this circumstance the heat capacity of the composition is reduced because of the hydrated salts are not being converted to their anhydrous forms during the heating/cooling cycle. In order to avoid this the amount of orthophosphate is normally less than 30% by weight of the weight of anhydrous pyrophosphate and more usually less than 20% by weight of the pyrophosphate. A further

2

advantage associated with the use of some of the preferred orthophosphate additives e.g. TSP in the compositions of this invention is that they are capable of forming hydrated derivatives which undergo a transition between the anhydrous and hydrated forms at temperatures falling within the normal heating/cooling cycle ie. 60—80°C. They thus make a contribution to the capacity of the heat storage medium. Nevertheless we prefer to utilise smaller quantities of orthophosphate as the increased stability of the pyrophosphate which results from the addition of larger quantities of orthophosphate does not compensate for the reduction in heat capacity. In general the addition of from 3.0 to 5.0% of orthophosphate is sufficient to ensure that the transition temperature remains above 60°C after 15 years of exposure to elevated temperature in a domestic heating system which is sufficient for most purposes. In its preferred embodiments the transition temperature of the heat storage compositions of the present invention will remain above 60°C for at least 5 and preferably at least 10 years in these systems. The pH of the heat storage compositions of this invention will not normally be greater than 11.6. Preferably they will have a pH in the range 10.7 to 11.2.

The novel compositions may be employed as a heat storage medium simply by enclosing them in a suitable container. A feature of such systems is the incongruence of the phase between the transition ie. the fact that at temperatures above the transition temperature the medium comprises two phases, a solid phase comprising anhydrous 4SP and an aqueous liquid phase which phases tend to separate under the influence of gravity. This separation limits the ability of the phases to recombine to form a single solid phase when the medium is cooled to a temperature below the transition temperature ie. when 4SP decahydrate is formed. This incongruency reduces the efficiency of the heat storage medium as the heating/cooling cycle is repeated. Various methods for alleviating this problem have been described or disclosed e.g. in European Patent 11411 and European Patent Application 1011811. These disclosures describe the use of a suspension of the hydrated salt in an aqueous gel or a thickened aqueous medium in order to reduce the separation of the liquid and solid phases the gelling or thickening being achieved by the addition of a suspending agent. Examples of compounds which have been proposed for use as suspending agents are gelatine, (as in British Patent 1543336) starch, cross linked starch or cellulose polymers, alginates (see US Patent 3986969 and British Patent 1298674) polyvinyl alcohol, polyacrylic acid, polyethylene oxide, clays, diatomaceous earth, fibrous materials such as fibrous silicon oxide or magnesium oxide, zeolites, or open cell polymeric matrices such as those described in European Patent 101181. We prefer to utilise water swollen cross linked polymer hydrogels of the type described in European Patent Application 101181. Such a hydrogel may be formed by cross-linking a water-soluble or water-dispersible synthetic hydrophilic polymer, or it may be formed by polymerisation of appropriate monomers or pre-polymers (either in the presence of the aqueous pyrophosphate, or in the absence thereof). When formed from a hydrophilic polymer, the latter is preferably linear and thermoplastic, and may have:

(i) pendant carboxylic or sulphonic groups, in which case it is preferably cross-linked by reaction with cations of a polyvalent metal (in which case the polymer and the source of the cations of polyvalent metal are preferably as described in detail in European Patent 99); and/or

(ii) functional groups which are cross-linkable by a covalent cross-linking mechanism (in which case the polymer and cross-linking agent therefor are preferably as described in detail in European Patent 11411).

It is particularly preferred that the cross-linked polymer in such a hydrogel matrix retains active hydrophilic groups (that is, they are not blocked during cross-linking). For example, where the hydrogel is produced from a polymer of an ethylenically unsaturated monomer or monomers having carboxy groups (such as a polyacrylamide), the polymer preferably contains at least 20% of units containing carboxy groups.

In the present invention we prefer to formulate heat storage media comprising 4SP using one or more of these suspending agents in order to reduce the incongruence of the phase separation. We particularly prefer to formulate the heat storage media in the hydrogels which are described in European Patent Application 101181.

The pyrophosphate which is employed in the heat storage compositions of the present invention need not to be a pure material but the presence of impurities which tend to promote its degradation should be avoided.

Commercial products sold as 4SP are commonly produced by the calcination of disodium hydrogen orthophosphate. Such product normally contain minor quantities of other phosphates e.g. unchanged disodium hydrogen orthophosphate, trisodium orthophosphate (carried over from the neutralisation of phosphoric acid to produce the sodium hydrogen orthophosphate) and the salts of higher condensed phosphoric acids especially sodium tripolyphosphate. Typical commercial products sold as anhydrous 4SP contain up to 0.5% by weight of TSP. The presence of this material should be allowed for when calculating how much TSP is to be present in a heat storage composition according to the present invention. It is of course preferred to add quantities of TSP so that the total quantity is within the preferred limits as herein before described. It is preferred to utilise a 4SP product which comprises at least 90% and preferably at least 95% by weight of 4SP. The products preferably comprise no more than 10% and more preferably no more than 5% of material other than 4SP and TSP.

The presence of impurities which tend to promote the degradation of the 4SP should be avoided in so

3

far as is possible. We have discovered that the presence of the salts of higher condensed phosphoric acids especially tripolyphosphoric acid tends to accelerate the degradation of the pyrophosphate and accordingly pyrophosphates which contain such salts are less preferred for present use. Preferably the pyrophosphate will contain less than 5% and more preferably less than 3% e.g. less 1% of tripolyphosphate. The presence of these higher condensed polyphosphates reduces the pH of the composition and where they are present it is necessary to compensate for this by the addition of greater quantities alkaline materials e.g. the orthophosphates or alkali metal hydroxides.

The presence of disodium hydrogen orthophosphate is also disadvantageous but to a lesser degree. Preferably the 4SP will contain less than 10% and more preferably less than 5% of disodium hydrogen orthophosphate.

4SP may conveniently be manufactured by the addition of a basic derivative of sodium (which is usually sodium hydroxide) to phosphoric acid in a quantity which is sufficient to form 4SP ie. to form disodium hydrogen orthophosphate; drying the slurry or solution thus formed to produce solid disodium hydrogen orthophosphate and calcining this solid.

In order to produce a product having a consistent pH conventional 4SP products have been produced by neutralizing the phosphoric acid with a quantity of base which is not more than that which is required to form disodium hydrogen phosphate. The calcination of such materials produces a product comprising relatively large quantities ie. up to 5% of higher condensed phosphates and smaller quantities ie. less than 0.5% by weight of trisodium phosphate. Compositions comprising 4SP which contain more than 2.5% of an alkali metal orthophosphate are believed to be novel and form a further aspect of the present invention.

Compositions comprising 4SP in admixture with an alkali metal orthophosphate may be formulated by simple admixture of these two compounds. Where such processes are employed we prefer to utilise the crystalline dodecahydrate form of trisodium orthophosphate as the orthophosphate additive since this facilitates the intimate admixture of the ingredients of the composition.

We have discovered that a pyrophosphate which contains trisodium orthophosphate may conveniently be produced by neutralising the phosphoric acid with a quantity of base which in excess e.g. 101 to 103% preferably 101 to 102% of the stoichiometric quantity required to form disodium hydrogen orthophosphate. The resulting product comprises a mixture of disodium hydrogen orthophosphate containing a minor part of TSP (the amount of TSP being proportional to the excess of the basic derivative which was employed) The TSP is unchanged during the drying and calcination of this product and therefore this drying and calcination produces a 4SP product which comprises TSP intimately admixed with it. This addition of quantities of base to phosphoric acid in excess of that required to form disodium hydrogen phosphate is also advantageous in that it minimises the tripolyphosphate content of the 4SP product. Efficient calcination can lead to a 4SP product containing less than 0.2% of tripolyphosphate.

Accordingly from another aspect our invention provides a process for the production of 4SP suitable for use in a heat storage medium which comprises heating a mixture of disodium hydrogen phosphate and an alkali metal orthophosphate under such conditions that the disodium hydrogen phosphate is converted to 4SP.

The calcination may be effected by heating the dried disodium hydrogen phosphwte at temperatures of from 300 to 700°C for periods of from 1 to 6 hours the shorter times referring to the higher temperatures. In general we prefer to utilise 4SP products prepared by calcination at temperatures of from 400 to 600°C for periods of from 1 to 4 hours in the compositions of our invention. The most preferred process comprise calcination at temperatures of from 450 to 550°C for periods of from 2 to 4 hours.

The phosphoric acid from which the 4SP is derived may be thermal acid, ie. acid obtained by burning phosphorus and absorbing the phosphorus pentoxide produced in water or a dilute solution of phosphoric acid or wet process acid ie. acid obtained by the acidulation of phosphate rock or a purified acid obtained therefrom e.g. by solvent extraction or by precipitation of impurities. In general the use of thermal acid or purified wet process acid is preferred in that they are more pure grades of acid but wet process acid may be used. Both thermal and wet process acid contain at least trace amounts of metallic impurities e.g. iron, chromium manganese and copper ions but these do not exert a significant effect upon the stability of the 4SP and their presence is thereby tolerable.

The 4SP product preferably containing TSP may be utilised as a heat storage medium by packing it into water tight containers with at least sufficient water to form the decahydrate of 4SP. These containers conveniently take the form of long cylindrical tubes which are packed with the product to form a heat storage element. These elements may be used e.g. in a domestic central heating system wherein the element is immersed in water within a water circulation system. The packing of the tubes is preferably achieved by admixing the solid mixture of 4SP with at least sufficient water as is required to form the decahydrate of 4SP and the hydrated form of any orthophosphate e.g. TSP which is be present. The use of TSP is especially advantageous because it can form a hexahydrate and an octahydrate. The amount of water added may vary between the amounts required to form these hydrates without significantly affecting the properties of the composition. Where the composition comprises 4SP and either TKP or TSP the quantity of water present may vary from that required to form the hydrated form of the phosphates without significantly affecting the heat storage capacity of the composition. In general a variation of 3% on the theoretical quantity of water required will not effect the heat storage capacity of the composition. In general we prefer to use the quantity of water which is slightly in excess e.g. 1—2% in excess of that required to form the hydrated forms of the phosphates.

Heat storage elements containing the novel heat storage compositions comprising 4SP are believed to be novel and form another aspect of our invention. Thus from another aspect the invention provides a heat storage element which comprises a heat storage composition comprising tetrasodium pyrophosphate as hereinbefore described in a liquid tight container.

Heating systems which contain heat storage elements according to the invention form another aspect of the invention. Accordingly the invention provides a storage heating system comprising a thermal reservoir, means for supplying heat to the reservoir and means for withdrawing heat from the reservoir wherein the reservoir contains at least one heat storage element as hereinbefore described.

During the mixing of the ingredients of the heat storage composition the temperature of the mixture is maintained at a level which is above the transition temperature between the 4SP and its decahydrate. At these temperatures the mixture takes the form of a slurry or paste which can be pumped into liquid tight containers wherein it will form a dry mixture comprising 4SP decahydrate and where appropriate (e.g. when TSP is present) hydrated forms of the orthophosphate on cooling.

In a preferred embodiment the heat storage composition comprises a suspending agent as hereinbefore described. Such an agent may conveniently be added to the slurry comprising 4SP and water prior to its being packed into the heating elements. Where appropriate the agent e.g. in the case of the cross linked polymer hydrogel matrices which are described in European Patent 11411 and European Patent Application 101181 the suspending agent may be produced in situ thus ensuring the intimate admixture of the 4SP and the polymer. Thus it is preferred to premix a polymer or prepolymer, any curing or cross linking agent and the 4SP with the water so as to form a slurry or paste which is then pumped into the heat storage elements and subsequently to cure the polymer e.g. by allowing it to age or by heating it to an elevated temperature say 40 to 70°C.

The amount of suspending agent which is employed is preferably kept to a minimum in order to maximise the heat storage capacity of a unit volume of the composition. The amount of agent required to safeguard against the incongruence of the phase transition varies with the nature of the agent. A preferred agent for present use are polyacrylamide hydrogels and these need to be present in a quantity of from 2 to 20% preferably from 2 to 10% by weight of the heat storage composition. These hydrogels appear to promote the degradation of the pyrophosphate and the quantity employed will preferably be not significantly greater than is required to safeguard against incongruence. Usually from 2 to 4% of such a hydrogel is sufficient for this purpose.

The novel heat storage compositions may contain other additives if desired. We have discovered that the addition of water soluble salts which are otherwise inert such as sodium chloride and sulphate is advantageous in so far as it appears to reduce the rate of hydrolysis of the pyrophosphate. However this addition reduces the heat storage capacity of the composition and tends to lower the transition temperature between the anhydrous and the hydrated phases. In general we prefer that such salts are present in quantities which are no greater than 3% by weight of the weight of anhydrous 4SP present. Commercial grade products sold as 4SP may contain sodium sulphate in small quantities e.g. 1 to 2% and the presence of this sulphate can be tolerated. The presence of additives which will reduce the pH of the composition ie. render the aqueous phase present at temperatures above the transition temperature less strongly alkaline is less preferred since this will increase the rate of hydrolysis of the pyrophosphate. The presence of any such additive should be avoided in so far as is possible.

The novel heat storage compositions may further comprises other conventional ingredients of such compositions e.g. insoluble nucleating agents selected to minimise any supercooling e.g. borax and water miscible dispersants such as methanol or ethanol which assist the production of a homogeneous composition.

The invention is illustrated by the following examples:—

Example 1

A series of pyrophosphate products A to G having the compositions as shown in Table, I were formulated into heat storage compositions.

5

TABLE I

| Pyrophosphate sample | A | B | C | D | E | F | G |
|---|---|---|---|---|---|---|---|
| $Na_2HPO_4$ | 0.4 | 0.4 | 0.4 | 0.5 | 0.5 | 0.2 | 0.1 |
| $Na_3PO_4$ | 0.0 | 1.6 | 0.0 | 1.3 | 0.6 | 3.7 | 0.0 |
| $Na_4P_2O_7$ | 93.5 | 92.5 | 87.3 | 95.2 | 95.9 | 93.9 | 53.2 |
| $Na_5P_3P_{10}$ | 5.0 | 1.7 | 9.0 | 0.9 | 1.0 | 0.2 | 0.1 |
| pH | 10.0 | 10.6 | 9.9 | 10.4 | 10.2 | 11.0 | 10.2 |
| $Na_2SO_4$ | 0.04 | 1.8 | 2.1 | 1.0 | 2.0 | 1.9 | 0.00 |
| | | | | | | | Balance $H_2O$ |

Sample F was manufactured by the neutralisation of phosphoric acid with 101.5% of the stoichiometric quantity required to form disodium hydrogen orthophosphate of sodium hydroxide, drying and calcining the product at 500°C for 3 hours. Sample G comprised tetrasodium pyrophosphate decahydrate which had been crystallised from a solution of Sample A.

The heat storage compositions were made up as follows:—

150 gms of the tetrasodium pyrophosphate (anhydrous)
100 gms de-ionised water
10 gms Versicol WN 33*
2 gms Formalin

A series of heat storage compositions comprising various orthophosphate additives were made up having the identical composition except that an appropriate quantity of the 4SP was replaced by the additive so that the total weight of phosphates (ie. pyrophosphate plus phosphate additive) was 150 gms. Where the dodecahydrate of TSP was employed as the additive the quantity of water added was reduced by the amount which was added as the dodecahydrate.

The rate of hydrolysis of the tetrasodium pyrophosphate in these compositions was studied by storing samples of each in a liquid tight container at a temperature of 85°C. Samples were analysed at intervals using the auto-analyser chromatographic method described by Greenfield and Clift in "The Analytical Chemistry of Condensed Phosphates" published by the Peryammon Press in 1975.

The analysis was terminated after 30% of the pyrophosphate had been hydrolysed or after 150 days storage whichever was the earlier. The results are shown in Table II:—

---

* A polyacrylamide solution containing 90% active material supplied by Allied Colloids Ltd.

TABLE II

| Pyrophosphate sample | Additive | pH of 1% solution at 25°C | Degree of hydrolysis after 150 days (%) | Time taken for 30% hydrolysis (days) |
|---|---|---|---|---|
| A | — | 9.5 | — | 50 |
| A | 3% (4.5 gm) TSP | 10.5 | | 92 |
| A | 5% (7.5 gm) TSP | 10.8 | 19.8 | — |
| B | — | 10.0 | 28.5 | — |
| B | 3% (4.5 gm) TSP | 10.8 | 10.0 | — |
| B | 4% (6.0 gm) TSP | 10.9 | 2.5 | — |
| B | 5% (7.5 gm) TSP | 11.0 | 1.6 | — |
| B | 3% (4.5 gm) TKP | 10.6 | 21.8 | — |
| B | 4% (6.0 gm) TKP | 10.8 | 17.6 | — |
| B | 5% (7.5 gm) TKP | 10.9 | 9.4 | — |
| B | 3% as TSP (10.7 gms) TSP12H$_2$O | 10.9 | 4.2 | — |
| C | — | 9.4 | — | 18 |
| C | 3% (4.5 gm) TSP | 10.3 | — | 36 |
| C | 5% (7.5 gm) TSP | 10.5 | — | 89 |
| D | — | 9.9 | — | 34 |
| D | 3% (4.5 gms) TSP | 10.7 | 22.0 | — |
| D | 3% as TSP (10.7 gms) TSP12H$_2$O | 11.0 | 9.4 | — |
| E | — | 9.9 | — | 36 |
| E | 3% (4.5 gm) TSP | 10.6 | — | 133 |
| E | 3% as TSP (10.7 gms) TSP12H$_2$O | 10.9 | 12.3% | — |
| E | 5% (7.5 gm) TSP | 11.0 | 4.8% | — |
| E | 5% as TSP (17.4 gms) TSP12H$_2$O | 11.1 | 0.9% | — |
| F | — | 10.7 | 7.9% | — |
| G* | — | 9.7 | — | 35 |

* Composition G was prepared by heating the decahydrate beyond its melting point and subsequently adding the polyacrylamide and the formalin.

Example 2

A heat storage composition (Composition A) was made up as follows:—

150 gms of tetrasodium pyrophosphate having the analysis of sample E in Table I
100 gms de-ionised water
10 gms Versicol WN 33*
2 gms Formalin

* A polyacrylamide solution containing 90% active material suppling by Allied Colloids Limited.

A second composition (Composition B) as follows:—

147.6 gms of tetrasodium pyrophosphate having the analysis of sample B in Table I
6.0 gms trisodium orthophosphate dodecahydrate
96.4 gms deionised water
2.0 gms Formalin

The ingredients of each composition were thoroughly mixed whilst being maintained at a minimum temperature of 75°C. The resulting slurry was packed into a series of cylindrical plastic tubes (length 150 mm internal diameter 35 mm) which were fitted with a thermocouple and fully sealed. The tubes were maintained at a temperature of 85°C and at set intervals a tube was allowed to cool, the temperature being recorded at intervals during that cooling. 15 days exposure to a temperature of 85°C is estimated to be equivalent to 1 years operation in a domestic heating system operating at temperatures of from 60 to 80°C. The temperature of the tubes dropped until transition commenced and then rose as the phase transition took place before falling away again. The maximum was recorded as the transition temperature. The results are presented in the following table:

| Transition temperature after T days | Composition A | Composition B |
|---|---|---|
| T=0 | 69.3 | 69.4 |
| T=7 | 69.2 | 70.1 |
| T=20 | | 70.0 |
| T=38 | 66.3 | |
| T=50 | 65.4 | |

Example 3(a)

The Composition B described in Example 2 was subjected to a cyclical test procedure. Samples of the composition were maintained at a temperature of 85°C for a period of 4 hours and then allowed to cool in an air swept oven for a period of 4 hours. They were then reheated to a temperature of 85°C and the cycle repeated. The transition temperature was noted after a set number of heating/cooling cycles had been completed. The results were as follows:—

| No. of cycles | Transition temperature °C |
|---|---|
| 0 | 69.4 |
| 69 | 70.0 |
| 132 | 70.3 |
| 174 | 70.0 |

120 cycles of this nature are estimated to be equivalent to 1 years use in a domestic central heating system.

Example 3(b)

A heat storage composition was made up as follows:—

145.5 gms 4SP (Sample E of Example 1)
4.5 gms TSP
100 gms de-ionised water
10 gms Versicol WN 33
2 gms Formalin

This composition was formulated according to the procedure described in Example 2 and tested in the cyclical heating/cooling test described in Example 3(a). The results were as follows:—

| Cycles | Transition temperature °C |
|---|---|
| 0 | —not measured |
| 69 | 71.3 |
| 132 | 70.8 |
| 174 | 70.9 |

## Claims

1. A solid composition useful as a heat storage medium which comprises tetrasodium pyrophosphate decahydrate characterised in that a 1% solution of the composition has a pH of at least 10.6 at 25°C.

2. A composition according to claim 1 characterised in that the composition has a pH in the range 10.6 to 11.7.

3. A composition according to either of claims 1 or 2 characterised in that the composition comprises an alkali metal hydroxide.

4. A composition according to claim 3 characterised in that the alkali metal hydroxide is sodium hydroxide.

5. A composition according to either of claims 1 or 2 characterised in that the composition comprises an alkali metal orthophosphate.

6. A composition according to claim 5 characterised in that the alkali metal orthophosphate is trisodium orthophosphate.

7. A composition according to either of claims 5 or 6 characterised in that the composition comprises from 2.5 to 30% of alkali metal orthophosphate (expressed as the weight of anhydrous orthophosphate as a percentage of the weight of anhydrous pyrophosphate).

8. A composition according to claim 7 characterised in that the composition comprises from 3 to 20% by weight of orthophosphate.

9. A composition according to any of claims 6 to 8 characterised in that the composition comprises from 3 to 7.5% by weight of orthophosphate.

10. A composition according to claim 6 characterised in that the orthophosphate is trisodium orthophosphate dodecahydrate.

11. A heat storage medium which comprises a composition according to any of claims 1 to 10 characterised in that it further comprises a suspending agent.

12. A composition according to claim 11 characterised in that the suspending agent is selected from the group comprising gelatine, starch, cross-linked starch or cellulose polymers, alginates, polyvinyl alcohol, polyacrylic acid, polyethylene oxide clays, diatomaceous earths, fibrous materials such as fibrous silicon oxide or magnesium oxide, zeolites and open cell polymeric matrices.

13. A composition according to claim 12 characterised in that the suspending agent is water swollen cross linked polymer hydrogel.

14. A composition according to any of claims 1 to 3 characterised in that it comprises less than 5% by weight of the anhydrous pyrophosphate of sodium tripolyphosphate.

15. A composition according to claim 14 characterised in that it comprises less than 3% by weight of tripolyphosphate.

16. A composition comprising anhydrous sodium pyrophosphate characterised in that it comprises at least 2.5% by weight of an alkali metal orthophosphate.

17. A composition according to claim 16 characterised in that it comprises trisodium orthophosphate.

18. A composition according to either of claims 16 or 17 characterised in that it comprises less than 5% by weight of sodium tripolyphosphate.

19. A composition according to claim 18 characterised in that it comprises less than 1% of sodium tripolyphosphate.

20. A process for the production of a composition according to any of claims 14 to 19 which comprises heating a mixture of disodium hydrogen phosphate and an alkali metal orthophosphate under such conditions that the disodium hydrogen phosphate is converted to tetrasodium pyrophosphate.

21. A process according to claim 20 characterised in that the mixture is heated at a temperature in the range 300 to 700°C for a period of from 1 to 6 hours.

22. A process according to claim 21 characterised in that the mixture is heated at a temperature of from 450°C to 550°C for a period of from 2 to 4 hours.

23. A process according to either of claims 21 or 22 characterised in that the mixture of disodium hydrogen phosphate and alkali metal phosphate is produced by neutralising phosphoric acid with a quantity of a basic derivative of an alkali metal which is in excess of that required to form disodium hydrogen phosphate.

24. A process according to claim 23 characterised in that the basic derivative is sodium hydroxide.

25. A process according to either of claims 23 or 24 characterised in that the quantity of base employed is 101 to 103% of the stoichiometric quantity required to form disodium hydrogen phosphate.

26. A heat storage element which comprises a composition according to any of claims 1 to 19 which is packed into a liquid tight container.

27. A process for the production of a heat storage element according to claim 26 characterised in that the anhydrous pyrophosphate is admixed with at least sufficient water as is required to form the hydrated salts of the pyrophosphate and any alkali metal orthophosphate which is present to form a slurry and the slurry is pumped into the liquid tight containers.

28. A process according to claim 27 characterised in that the quantity of water is from 100 to 103% of that required to form the hydrated salts.

29. A storage heating system comprising a thermal reservoir, means for supplying heat to the reservoir and means for withdrawing heat from the reservoir characterised in that the reservoir contains at least one heat storage element according to claim 26.

**Patentansprüche**

1. Feste, als Wärmespeichermedium verwendbare Zusammensetzung, die Tetranatriumpyrophosphat-Dekahydrat enthält, dadurch gekennzeichnet, daß eine 1%ige Lösung der Zusammensetzung bei 25°C einen pH-Wert von mindestens 10,6 hat.

2. Zusammensetzung nach Anspruch 1, dadurch gekennzeichnet, daß die Zusammensetzung einen pH-Wert im Bereich von 10,6 bis 11,7 hat.

3. Zusammensetzung nach einem der Ansprüche 1 oder 2, dadurch gekennzeichnet, daß die Zusammensetzung ein Alkalimetallhydroxid enthält.

4. Zusammensetzung nach Anspruch 3, dadurch gekennzeichnet, daß das Alkalimetallhydroxid Natriumhydroxid ist.

5. Zusammensetzung nach einem der Ansprüche 1 oder 2, dadurch gekennzeichnet, daß die Zusammensetzung ein Alkalimetall-Orthophosphat enthält.

6. Zusammensetzung nach Anspruch 5, dadurch gekennzeichnet, daß das Alkalimetallorthophosphat ein Trinatriumorthophosphat ist.

7. Zusammensetzung nach einem der Ansprüche 5 oder 6, dadurch gekennzeichnet, daß die Zusammensetzung 2,5 bis 30% Alkalimetallorthophosphat (ausgedrückt als Gewicht des wasserfreien Orthophosphats als Prozentsatz des Gewichts an wasserfreiem Pyrophosphat) enthält.

8. Zusammensetzung nach Anspruch 7, dadurch gekennzeichnet, daß die Zusammensetzung 3 bis 20 Gew.-% Orthophosphat enthält.

9. Zusammensetzung nach irgendeinem der Ansprüche 6 bis 8, dadurch gekennzeichnet, daß die Zusammensetzung 3 bis 7,5 Gew.-% Orthophosphat enthält.

10. Zusammensetzung nach Anspruch 6, dadurch gekennzeichnet, daß das Orthophosphat Trinatriumorthophosphat-Dodekahydrat ist.

11. Wärmespeichermedium, das eine Zusammensetzung nach einem der Ansprüche 1 bis 10 enthält, dadurch gekennzeichnet, daß es weiters ein Suspendiermittel enthält.

12. Zusammensetzung nach Anspruch 11, dadurch gekennzeichnet, daß das Suspendiermittel ausgewählt ist aus der Gruppe, die Gelatine, Stärke, vernetzte Stärke oder Zellulosepolymere, Alginate, Polyvinylalkohol, Polyacrylsäure, Polyethylenoxid-Tone, Diatomeenerde, faserige Materialien, wie faserriges Siliciumoxid oder Magnesiumoxid, Zeolithe und offenzellige Polymermatrices enthält.

13. Zusammensetzung nach Anspruch 12, dadurch gekennzeichnet, daß das Suspendiermittel wassergequollenes, vernetztes Polymerhydrogel ist.

14. Zusammensetzung nach irgendeinem der Ansprüche 1 bis 13, dadurch gekennzeichnet, daß sie weniger als 5 Gew.-% des wasserfreien Pyrophosphats des Natriumtripolyphosphats enthält.

15. Zusammensetzung nach Anspruch 14, dadurch gekennzeichnet, daß sie weniger als 3 Gew.-% Tripolyphosphat enthält.

16. Zusammensetzung, die wasserfreies Natriumpyrophosphat enthält, dadurch gekennzeichnet, daß sie zumindest 2,5 Gew.-% eines Alkalimetallorthophosphate enthält.

17. Zusammensetzung nach Anspruch 16, dadurch gekennzeichnet, daß sie Trinatriumorthophosphat enthält.

18. Zusammensetzung nach einem der Ansprüche 16 oder 17, dadurch gekennzeichnet, daß sie weniger als 5 Gew.-% Natriumtripolyphosphat enthält.

19. Zusammensetzung nach Anspruch 18, dadurch gekennzeichnet, daß sie weniger als 1% Natriumtripolyphosphat enthält.

20. Verfahren zur Herstellung einer Zusammensetzung nach irgendeinem der Ansprüche 14 bis 19, bei welchem eine Mischung aus Dinatriumhydrogenphosphat und einem Alkalimetallorthophosphat unter solchen Bedingungen erhitzt wird, daß das Dinatriumhydrogenphosphat in Tetranatriumpyrophosphat umgewandelt wird.

21. Verfahren nach Anspruch 20, dadurch gekennzeichnet, daß die Mischung während eines Zeitraums von 1 bis 6 Stunden auf eine Temperatur im Bereich von 300 bis 700°C erhitzt wird.

22. Verfahren nach Anspruch 21, dadurch gekennzeichnet, daß die Mischung während eines Zeitraums von 2 bis 4 Stunden auf eine Temperatur von 450°C bis 550°C erhitzt wird.

23. Verfahren nach einem der Ansprüche 21 oder 22, dadurch gekennzeichnet, daß die Mischung von Dinatriumhydrogenphosphat und Alkalimetallphosphat durch Neutralisation von Phosphorsäure mit einer in bezug auf die zur Bildung von Dinatriumhydrogenphosphat erforderliche Menge überschüssigen Menge eines basischen Derivates eines Alkalimetalls neutralisiert wird.

24. Verfahren nach Anspruch 23, dadurch gekennzeichnet, daß das basische Derivat Natriumhydroxid ist.

25. Verfahren nach einem der Ansprüche 23 oder 24, dadurch gekennzeichnet, daß die Menge der verwendeten Base 101 bis 103% der für die Bildung von Dinatriumhydrogenphosphat erforderlichen Menge beträgt.

26. Wärmespeicherelement, das eine Zusammensetzung nach irgendeinem der Ansprüche 1 bis 19, in einem flüssigkeitsdichten Behälter verpackt, enthält.

27. Verfahren zur Herstellung eines Wärmespeicherelements nach Anspruch 25, dadurch gekennzeichnet, daß das wasserfreie Pyrophosphat mit einer Wassermenge vermischt wird, die zumindest ausreicht, um die hydratisierten Salze des Pyrophosphats und irgendeines vorliegenden Alkalimetallorthophosphats zu bilden, wodurch eine Aufschlämmung gebildet wird, die in die flüssigkeitsdichten Behälter gepumpt wird.

28. Verfahren nach Anspruch 27, dadurch gekennzeichnet, daß die Wassermenge bei 100 bis 103% jener Menge liegt, die zur Bildung der hydratisierten Salze erforderlich ist.

29. Speicherheizsystem, das ein Wärmereservoir, Mittel zur Wärmezufuhr zu diesem Reservoir und Mittel zum Abziehen der Wärme von demselben enthält, dadurch gekennzeichnet, daß das Reservoir zumindest ein Wärmespeicherelement nach Anspruch 26 enthält.

**Revendications**

1. Composition solide utilisable comme milieu d'emmagasinage de chaleur, comprenant un pyrophosphate tétrasodique décahydraté, caractérisée en ce qu'une solution à 1% de la composition a un pH d'au moins 10,6 à 25°C.

2. Composition suivant la revendication 1, caractérisée en ce qu'elle a un pH dans l'intervalle de 10,6 à 11,7.

3. Composition suivant l'une quelconque des revendications 1 et 2, caractérisée en ce qu'elle comprend un hydroxyde de métal alcalin.

4. Composition suivant la revendication 3, caractérisée en ce que l'hydroxyde de métal alcalin est l'hydroxyde de sodium.

5. Composition suivant l'une quelconque des revendications 1 et 2, caractérisée en ce qu'elle comprend un orthophosphate de métal alcalin.

6. Composition suivant la revendication 5, caractérisée en ce que l'orthophosphate de métal alcalin est l'orthophosphate trisodique.

7. Composition suivant l'une quelconque des revendications 5 et 6, caractérisée en ce qu'elle comprend 2,5 à 30% d'orthophosphate de métal alcalin (exprimé en poids d'orthophosphate anhydre en tant que pourcentage du poids de pyrophosphate anhydre).

8. Composition suivant la revendication 7, caractérisée en ce qu'elle comprend 3 à 20% en poids d'orthophosphate.

9. Composition suivant l'une quelconque des revendications 6 à 8, caractérisée en ce qu'elle comprend 3 à 7,5% en poids d'orthophosphate.

10. Composition suivant la revendication 6, caractérisée en ce que l'orthophosphate est l'orthophosphate trisodique dodécahydraté.

11. Milieu d'emmagasinage de chaleur comprenant une composition suivant l'une quelconque des revendications 1 à 10, caractérisé en ce qu'il comprend en outre un agent de mise en suspension.

12. Composition suivant la revendication 11, caractérisée en ce que l'agent de mise en suspension est choisi dans le groupe comprenant la gélatine, l'amidon, l'amidon réticulé ou les polymères cellulosiques, les alginates, l'alcool polyvinylique, l'acide polyacrylique, les argiles d'oxyde de polyéthylène, les terres à diatomées, les matières fibreuses comme l'oxyde de silicium ou l'oxyde de magnésium à l'état fibreux, les zéolites et les matières polymères à cellules ouvertes.

13. Composition suivant la revendication 12, caractérisée en ce que l'agent de mise en suspension est un hydrogel de polymère réticulé gonflé à l'eau.

14. Composition suivant l'une quelconque des revendications 1 à 13, caractérisée en ce qu'elle comprend moins de 5% en poids de tripolyphosphate de sodium par rapport au pyrophosphate anhydre.

15. Composition suivant la revendication 14, caractérisée en ce qu'elle comprend moins de 3% en poids de tripolyphosphate.

16. Composition comprenant du pyrophosphate de sodium anhydre, caractérisé en ce qu'elle comprend au moins 2,5% en poids d'un orthophosphate de métal alcalin.

17. Composition suivant la revendication 16, caractérisée en ce qu'elle comprend de l'orthophosphate trisodique.

18. Composition suivant l'une quelconque des revendications 16 et 17, caractérisée en ce qu'elle comprend moins de 5% en poids de tripolyphosphate de sodium.

19. Composition suivant la revendication 18, caractérisée en ce qu'elle comprend moins de 1% de tripolyphosphate de sodium.

20. Procédé de production d'une composition suivant l'une quelconque des revendications 14 à 19, comprenant le chauffage d'un mélange d'hydrogénophosphate disodique et d'un orthophosphate de métal alcalin dans des solutions telles que l'hydrogénophosphate disodique soit converti en pyrophosphate tétrasodique.

21. Procédé suivant la revendication 20, caractérisé en ce que le mélange est chauffé à une température dans l'intervalle de 300 à 700°C pendant 1 à 6 heures.

22. Procédé suivant la revendication 21, caractérisé en ce que le mélange est chauffé à une température de 450°C à 550°C pendant 2 à 4 heures.

23. Procédé suivant l'une quelconque des revendications 21 et 22, caractérisé en ce que le mélange d'hydrogénophosphate disodique et de phosphate de métal alcalin est produit en neutralisant l'acide phosphorique avec une quantité d'un dérivé basique d'un métal alcalin qui est en excès par rapport à celle requise pour former un hydrogénophosphate disodique.

24. Procédé suivant la revendication 23, caractérisé en ce que le dérivé basique est l'hydroxyde de sodium.

25. Procédé suivant l'une quelconque des revendications 23 et 24, caractérisé en ce que la quantité de base utilisée est de 101 à 103% de la quantité stoechiométrique requise pour former l'hydrogénophosphate disodique.

26. Elément d'emmagasinage de chaleur, comprenant une composition selon l'une quelconque des revendications 1 à 19, qui est emballée dans un conteneur étanche vis-à-vis des liquides.

27. Procédé de production d'un élément d'emmagasinage de chaleur suivant la revendication 26, caractérisé en ce que le pyrophosphate anhydre est mélangé avec au moins assez d'eau nécessaire à la formation des sels hydratés de pyrophosphate et d'un quelconque orthophosphate de métal alcalin qui est présent pour former une suspension et la suspension est introduite par pompage dans des conteneurs étanches aux liquides.

28. Procédé suivant la revendication 27, caractérisé en ce que la quantité d'eau est de 100 à 103% de celle requise pour la formation des sels hydratés.

29. Système de chauffage avec emmagasinage de chaleur, comprenant un réservoir thermique, un dispositif de fourniture de chaleur au réservoir et un dispositif d'enlèvement de la chaleur du réservoir, caractérisé en ce que le réservoir contient au moins un élément d'emmagasinage de chaleur suivant la revendication 26.